# EUROPÄISCHE PATENTSCHRIFT

(11) **EP 2 119 733 B1**
(45) Veröffentlichungstag und Bekanntmachung des Hinweises auf die Patenterteilung: **17.11.2010**
(21) Anmeldenummer: 09005517.9
(22) Anmeldetag: 20.04.2009
(51) Int. Cl.: C08F 218/04, C08F 220/58, C09D 131/02, C09D 133/24

(54) **Polyvinylesterdispersionen und deren Verwendung**
Polyvinyl ester dispersions and their application
Dispersions d'éthers de polyvinyle et son utilisation

(30) Priorität: 13.05.2008 DE 102008023389
(43) Veröffentlichungstag der Anmeldung: 18.11.2009
(73) Patentinhaber: Celanese Emulsions GmbH, 61476 Kronberg/Ts. (DE)
(72) Erfinder: Jakob, Martin, Dr., 65779 Kelkheim (DE); Hardt, Daniela, 65843 Sulzbach (DE); Faust, Hans-Uwe, 65835 Liederbach (DE)
(74) Vertreter: Ackermann, Joachim

(56) Entgegenhaltungen:
- EP-A- 1 505 085
- DE-A1-102005 057 645

## Beschreibung

Die vorliegende Erfindung betrifft Polyvinylesterdispersionen mit ausgewählten Vernetzungsmitteln und Vernetzungskatalysatoren. Daraus lassen sich vorzugsweise wässrige Dispersionsklebstoffe formulieren, deren Verfilmungen eine erhöhte Wasserresistenz und gleichzeitig eine stark verringerte Tendenz zur thermisch induzierten Verfärbung aufweisen. Die Erfindung betrifft ferner die Herstellung dieser Polyvinylesterdispersionen, sowie deren Verwendung zum Verkleben oder Beschichten von beliebigen Substraten, vorzugsweise von porösen und semiporösen Substraten, wie Holz, insbesondere zur Verklebung von Furnieren.

Wässrige Polymerdispersionen, insbesondere von Polyvinylestern, wie Polyvinylacetat, werden als Weißleime zum Kleben von Holz und anderen porösen Substraten verwendet. Die Chemie dieser in großem Umfang industriell hergestellten Klebstoffe ist seit langem Gegenstand der Patentliteratur und ist in zahlreichen Fachpublikationen, beispielsweise in Wood Adhesives - Chemistry and Technology, Band 1, Kapitel 7, Marcel Dekker, New York, 1983, beschrieben worden.

Eine Untergruppe der Polyvinylesterdispersionen mit großer kommerzieller Bedeutung bilden solche mit erhöhter Wasserresistenz ihrer Verfilmungen. Die Anfälligkeit von Klebverbindungen auf Polyvinylester-Basis gegenüber Wasser beruht zum größten Teil auf der Anwesenheit von hydrophilen Stabilisierungsmitteln, insbesondere von Polyvinylalkohol, die üblicherweise bei der Herstellung der Klebstoffdispersion eingesetzt werden. Ein möglicher Weg, eine Verbesserung der Wasserresistenz zu erreichen, besteht daher beispielsweise darin, die Hydrophilie des Klebstoffs durch eine Vernetzung des Polyvinylalkohols mit reaktiven Verbindungen zu vermindern. Marktgängige Systeme basieren auf dem Einsatz vernetzender Comonomere, wie N-Methylol(meth)acrylamid oder dem Zusatz von vernetzend wirkenden Harzen, Polyisocyanaten oder polyfunktionellen Carbonylverbindungen in freier oder maskierter Form.

Um bei Raumtemperatur eine ausreichende Reaktivität zu gewährleisten, ist häufig eine Absenkung des pH-Wertes mittels Zusatz von aciden Verbindungen nötig. Einige Mechanismen, beispielsweise die Methylolkondensation oder Acetalisierung, werden durch starke Lewis-Säuren beschleunigt. Aus diesem Grunde setzt man den Dispersionen beispielsweise saure Salze des Aluminiums als Härterkomponente zu. Im Handel erhältlich sind diese Produkte sowohl in einkomponentiger, als auch in zweikomponentiger Form.

Ein bekannter technischer Nachteil dieser Systeme besteht in der mangelnden Farbneutralität ihrer Verfilmungen oder Verklebungen bei Einwirkung von Wärme oder aktinischer Strahlung. Deswegen sind die Produkte für alle Applikationen, bei denen heiß verklebt wird, zum Beispiel bei der Furnierleimung mit hydraulischen Heißpressen, nur bedingt geeignet.

Die thermische Verfärbung wird partiell durch die zumeist als Schutzkolloid verwendete Verbindung Polyvinylalkohol verursacht, bei dem leicht im Sauren unter Aluminiumsalz-katalysierter Dehydratisierung oder Dehydroacetoxylierung konjugierte Doppelbindungssysteme entstehen. Bei thermischer Belastung verfärben sich diese Filme oberhalb 100 °C leicht rötlich bis dunkelbraun. Schon bei Raumtemperatur tritt allmählich Vergilbung ein. Der Effekt wird vor allem bei der Verklebung heller Holzarten, wie Kiefernholz, störend sichtbar.

Auch mit bestimmten Holzinhaltsstoffen tritt aufgrund der Oberflächendiffusion der wäßrigen Phase der Dispersion in das Substrat eine Verfärbung ein, bei der Aluminiumionen als Katalysator beim Aufbau der Chromophore eine Rolle zu spielen scheinen. Die Wechselwirkung tritt mit Baumharzen oder anderen holzartspezifischen Inhaltsstoffen auf. Probematische Holzsorten sind beispielsweise Eiche, Zeder, Robinie, Kirsche und Ahorn. Bei dünnen Holzzuschnitten, wie sie für die Furnierherstellung verwendet werden, ist der Effekt besonders störend.

In der Vergangenheit sind bereits mehrere Wege beschritten worden, um dieses Problem zu lösen.

Die DE-A 196 49 419 schlägt den Zusatz von niedermolekularem Polyvinylalkoholen mit einer Höppler-Viskosität von 2 bis 6 mPa*s (4 %ige wäßrige Lösung) zu der mit N-Methylolacrylamid vernetzten Polyvinylester-Dispersion vor. Hierzu werden vorzugsweise 2 bis 7,5 Gew.-%, bezogen auf das Gesamtgewicht der Dispersion, eingesetzt. Zusätzlich können noch 0,5 bis 1 Gew.-% von bekannten Komplexbildnern zugesetzt werden, beispielsweise EDTA. Bei Präsenz von Aluminiumionen ist der Effekt bei hohen Temperaturen aber zu schwach. Außerdem leidet durch den hohen Überschuß an niedermolekularem Polyvinylalkohol in der wäßrigen Phase die Wasserfestigkeit durch die zwangsläufig reduzierte Vernetzungsdichte.

JP-A 10-121 017 (CA 1998:287070) sieht die Verwendung von Aluminiumsulfat als Alternative zu Aluminiumchlorid, Phosphorsäure oder para-Toluolsulfonsäure als Härter für einen Klebstoff für die Furnierherstellung vor. Die Dispersion besteht aus einem Copolymeren von Vinylacetat und N-Methylolacrylamid. Vorschläge für die Substitution von Aluminium finden sich nicht.

JP-A 01-229 085 (CA 1990: 79772) schlägt als Furnierklebstoff ein Gemisch aus einer Dispersion auf Basis von Polyvinylacetat und einer in Wasser gelösten Chelatverbindung vor. Hierbei handelt es sich Natriumoxalat, Oxalsäure oder Natriumcitrat. Der Lösungsansatz ist aufgrund der zu geringen Wasserfestigkeit und der außerordentlich hohen Mengen an einzusetzender Chelatverbindung nur bedingt praktikabel.

Ein anderer Weg wird in der DE-A 103 29 594 beschritten. Diese Schrift beschreibt einen Klebstoff in vorzugsweise wässriger Dispersionsform, mit einem Dispersoid eines Polymers eines ethylenisch ungesättigten Monomers und einem ersten Dispergiermittel aus einem durch Ethyleneinheiten modifizierten Polyvinylalkohol mit einem Gehalt an Ethyleneinheiten unter 20 Mol-% und einem weiteren Vinylalkoholpolymer als zusätzliches Dispergiermittel. Diese Lösung genügt den Anforderungen bereits teilweise. Die Thermofarbneutralität wird durch Abwesenheit von Metallionen erreicht, allerdings sieht der Lösungsansatz kein Vernetzersystem vor. Deshalb wird beispielsweise ein einschlägiger Prüfstandard wie DIN EN 204/D3 ohne Zusatz weiterer, die Wasserfestigkeit verbessernder Komponenten nicht sicher erfüllt, insbesondere nicht bei der Verklebung problematischer Holzarten.

DE 103 35 673 A1 offenbart wasserresistente Dispersionsklebstoffe enthaltend Emulsionspolymerisate mit einer geringen Menge an vernetzbaren N-Methylolgruppen sowie ausgewählte Vernetzer mit veretherten oder teilveretherten N-Methylolgruppen. In der Beschreibung ist ausgeführt, dass zur Verbesserung der Wasserfestigkeit weitere Salze oder Additive, organische und/oder anorganische Säuren oder sauer reagierende anorganische Salze eingesetzt werden können. Als Beispiele für solche Additive werden Magnesiumchlorid, Citronensäure, Glykolsäure oder Natriumtetrafluroroborat genannt. Kombinationen von Metallsalzen mit Säuren werden nicht offenbart. Die in diesem Dokument beschriebenen Dispersionsklebstoffe enthalten darüber hinaus bevorzugt saure Metallsalze, wie AluminiumchloridHexahydrat, als Vernetzer.

DE 10 2005 057 645 A1 beschreibt Polyvinylesterdispersionen mit niedriger Filmbildetemperatur und hoher Wasserbeständigkeit. Diese sind durch die Verwendung ausgewählter Filmebildehilfsmittel charakterisiert. In der Beschreibung ist ebenfalls ausgeführt, dass zur Verbesserung der Wasserfestigkeit weitere Salze oder Additive, organische und/oder anorganische Säuren oder sauer reagierende anorganische Salze eingesetzt werden können. Als Beispiele für solche Additive werden Magnesiumchlorid, Citronensäure, Glykolsäure oder Natriumtetrafluroroborat genannt. Kombinationen von Metallsalzen mit Säuren werden nicht offenbart. Die in diesem Dokument beschriebenen Dispersionsklebstoffe enthalten darüber hinaus ebenfalls bevorzugt saure Metallsalze als Vernetzer.

Am Markt besteht ein Bedarf für einen Klebstoff mit farbneutralem Klebstoff-Film bei Raumtemperatur und thermischer Belastung, der sich beispielsweise für die Holzverklebung, insbesondere die Heißverklebung bei der Furnierherstellung eignet und der gleichzeitig einschlägige Prüfstandards für die Kaltwasserfestigkeit, beispielsweise der EN 204 /D3, mit Sicherheit erfüllt.

Aufgabe der vorliegenden Erfindung ist also die Bereitstellung einer Klebstoffzusammensetzung, deren Verklebungen in einem weiten Temperaturbereich keine Verfärbung zeigt, die darüber hinaus auch bei Einwirkung von aktinischer Strahlung keine Verfärbung zeigt, und die gleichzeitig eine hohe Kaltwasserbeständigkeit nach Applikation in Heißklebungsverfahren besitzt.

Überraschenderweise wurden jetzt Polyvinylesterdispersionen gefunden, welche die Lösung dieser Aufgabe gestatten.

Die vorliegende Erfindung betrifft eine wässrige Polyvinylesterdispersion enthaltend
a) mindestens ein Vinylester-Copolymer abgeleitet von mindestens einem Vinylester einer Monocarbonsäure, vorzugsweise einer gesättigten aliphatischen Carbonsäure, mindestens einem ethylenisch ungesättigtem und N-Alkylolgruppen und/oder Derivate von diesen Gruppen, insbesondere N-Methylolgruppen, enthaltenden Monomer und gegebenenfalls weiteren Comonomeren,
b) mindestens ein Schutzkolloid
c) mindestens eine Carbonsäure und/oder deren Salz, welche mindestens einen weiteren Rest ausgewählt aus der Gruppe der Hydroxyl-, Amino-, Carboxyl-, Carbonsäureester- und Carbonsäureamidreste enthält, und
d) mindestens ein wasserlösliches Salz mit einem zweiwertigen Metallion, insbesondere mit dem Metallion eines Metalles der zweiten Haupt- oder Nebengruppe des Periodensystems der Elemente.

Überraschenderweise führt die erfindungsgemäße Kombination der Härtungsmittel c) und d) verbunden mit dem spezifischen Vinylestercopolymer a) zu hohen Bindefestigkeiten der Verklebungen nach Kaltwasserbelastung und diese zeigen auch nach starker Temperaturbelastung und/oder nach starker Belastung durch aktinische Strahlung, wie UV-Strahlung, keinerlei oder eine gegenüber herkömmlichen Systemen stark reduzierte Verfärbungstendenz.

Deshalb sind die erfindungsgemäßen Polyvinylesterdispersionen besonders als Basis für Furnierklebstoffe geeignet.

Als Monomer-Basis für das Vinylester-Copolymer a) kommen prinzipiell folgende Gruppen an Monomeren in Betracht:
Eine Gruppe bilden Vinylester von ein bis achtzehn Kohlenstoffatome aufweisenden Monocarbonsäuren, beispielsweise Vinylformiat, Vinylacetat, Vinylpropionat, Vinylisobutyrat, Vinylvalerat, Vinylpivalat, Vinyl-2-ethylhexanoat, Vinyldecanoat, Isopropenylacetat, Vinylester von gesättigten verzweigten Monocarbonsauren mit 5 bis 15 Kohlenstoffatomen im Säurerest, insbesondere Vinylester der Versatic^{™}-Säuren, Vinylester von längerkettigen gesättigten oder ungesättigten Fettsäuren wie beispielsweise Vinyllaurat, Vinylstearat sowie Vinylester der Benzoesäure und substituierter Derivate der Benzoesäure wie Vinyl-p-tert.-butylbenzoat. Unter diesen ist jedoch Vinylacetat als Hauptmonomer besonders bevorzugt.

Eine Gruppe von Comonomeren, die neben den Vinylestern eingesetzt werden können, bilden aliphatische, monoolefinisch oder diolefinisch ungesättigte, gegebenenfalls halogen-substituierte Kohlenwasserstoffe, wie Ethen, Propen, 1-Buten, 2-Buten, Isobuten, konjugierte C₄-C₈-Diene, wie1,3-Butadien, Isopren, Chloropren, Vinylchlorid, Vinylidenchlorid, Vinylfluorid oder Vinylidenfluorid.

Eine weitere Gruppe von Comonomeren bilden Ester α,β-ethylenisch ungesättigter Mono- oder Dicarbonsäuren, insbesondere Ester α,β-ethylenisch ungesättigter C₃-C₈-Mono- oder Dicarbonsäuren mit vorzugsweise C₁-C₁₈-Alkanolen und insbesondere C₁-C₈-Alkanolen oder C₅-C₈-Cycloalkanolen. Bei den Estern der Dicarbonsäuren_kann es sich um Halbester oder vorzugsweise um Diester handeln. Geeignete C₁-C₈-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Beispiele sind Ester der Acrylsäure, der Methacrylsäure, der Crotonsäure, der Maleinsäure, der Itaconsäure, Citraconsäure oder der Fumarsäure wie (Meth)acrylsäuremethylester, (Meth)acrylsäureethylester, (Meth)acrylsäure-isopropylester, (Meth)acrylsäure-n-butylester, (Meth)acrylsäureisobutyl-ester, (Meth)acrylsäure-1-hexylester, (Meth)acrylsäure-tert-butylester, (Meth)acrylsäure-2-ethylhexylester, Di-n-methylmaleinat oder -fumarat, Di-n-ethylmaleinat oder -fumarat, Di-n-propylmaleinat oder -fumarat, Di-n-butylmaleinat oder -fumarat, Diisobutylmaleinat oder -fumarat, Di-n-pentylmaleinat oder -fumarat, Di-n-hexylmaleinat oder fumarat, Dicyclohexyl-maleinat oder -fumarat, Di-n-heptylmaleinat oder -fumarat, Din-octylmaleinat oder -fumarat, Di-(2-ethylhexyl)maleinat oder -fumarat, Di-n-nonylmaleinat oder -fumarat, Di-n-decylmaleinat oder -fumarat, Di-n-undecylmaleinat oder -fumarat, Dilaurylmaleinat oder -fumarat , Dimyristiylmaleinat oder -fumarat, Dipalmitoylmaleinat oder -fumarat, Di-stearylmaleinat oder -fumarat und Diphenylmaleinat oder -fumarat.

Eine weitere Gruppe von Comonomeren bilden die Alkenylaromaten. Dabei handelt es sich um Monoalkenylaromaten. Beispiele dafür sind Styrol, Vinyltoluol, Vinylxylol, α-Methylstyrol oder o-Chlorstyrol.

Die genannten Monomere bilden in der Regel die Hauptmonomeren, die in Bezug auf die Gesamtmenge der nach dem Verfahren der radikalischen wässrigen Polymerisation zu polymerisierenden Monomeren normalerweise einen Anteil von mehr als 50 Gew. %, bevorzugt mehr als 75 % auf sich vereinen.

Die Monomeren sind vorzugsweise so auszuwählen, dass ein Copolymerisat mit Klebstoffeigenschaften, vorzugsweise für Holz, entsteht. Dieses kann durch Einstellung der Glasübergangstemperatur der entstehenden Polymerisate in an sich bekannter Weise erfolgen.

Zusätzlich zu den genannten Hauptmonomeren weist das Vinylester-Copolymerisat mindestens noch Struktureinheiten auf, welche von ethylenisch ungesättigten Monomeren enthaltend N-Alkylolgruppen und/oder deren Derivaten insbesondere von N-Methyloleinheiten, abgeleitet sind. Der Anteil der von diesen Struktureinheiten abgeleiteten Comonomeren beträgt typischerweise nicht mehr als 20 Gew. %, vorzugsweise nicht mehr als 10 Gew. % und besonders bevorzugt zwischen 0,1 und 5 Gew. %, bezogen auf die Gesamtmenge der Monomeren.

Beispiele für ethylenisch ungesättigte Monomeren enthaltend N-Alkyloleinheiten, insbesondere N-Methyloleinheiten sind N-Alkylolderivate von Amiden ethylenisch ungesättigter Mono- oder Dicarbonsäuren, vorzugsweise der Acrylsäure oder der Methacrylsäure. Bevorzugte Beispiele für solche Monomere sind N-Methylolacrylamid, N-Methylolmethacrylamid, N-Methylolallylcarbamat, N-Ethylolacrylamid, N-Propylolacrylamid, N-Butylolacrylamid oder Dialkoxyhydroxyethylacrylamid. Daneben können auch Derviate von N-Methylolverbindungen, wie deren Ester, Ether oder Mannich-Basen eingesetzt werden. Beispiele dafür sind sowie die N-Methylolester, -alkylether oder Mannichbasen des N-Methylolacrylamids oder des N-Methylolmethacrylamids oder des N-Methylolallylcarbamats oder die Alkylether von. Dialkoxyhydroxyethylacrylamid.

Daneben können noch weitere Comonomere, welche die Eigenschaften in gezielter Weise modifizieren, bei der Copolymerisation mitverwendet werden.

Diese weiteren Comonomeren sind nur optional anwesend und werden als sogenannte Hilfsmonomere im Normalfall lediglich als modifizierende Monomere in Mengen, bezogen auf die Gesamtmenge der zu polymerisierenden Monomeren, von weniger als 50 Gew. %, in der Regel von weniger als 20, vorzugsweise zu weniger als 10 Gew. % einpolymerisiert.

Diese Monomeren können der weiteren Stabilisierung der Dispersionen dienen, indem sie beispielsweise durch Vernetzung während der Polymerisation oder während der Verfilmung die Filmkohäsion oder andere Eigenschaften verbessern. Es können damit aber auch gezielt andere gewünschte Eigenschaften eingestellt werden.

Monomere, die zur weiteren Stabilisierung dienen können, sind in der Regel Monomere, die eine Säurefunktion aufweisen und/oder deren Salze. Zu dieser Gruppe zählen beispielsweise α,β-monoethylenisch ungesättigte Mono- und Dicarbonsäuren mit 3 bis 10 C-Atomen, ethylenisch ungesättigte Sulfonsäuren, ethylenisch ungesättigte Phosphonsäuren und deren wasserlösliche Salze, z. B. deren Natriumsalze. Bevorzugte Monomere aus dieser Gruppe sind Vinylsulfonsäure und ihre Alkalisalze, Acrylamidopropan-sulfonsäure und ihre Alkalisalze, ethylenisch ungesättigte C₃-C₈-Carbonsäuren und C₄-C₈-Dicarbonsäuren, z. B. Maleinsäure, Fumarsäure, Itaconsäure, Crotonsäure, Vinylessigsäure, Acrylamido-glykolsäure und insbesondere Acrylsäure und Methacrylsäure.

Beispiele für vernetzende Hilfsmonomere sind zwei oder mehr Vinylreste aufweisende Monomere, zwei oder mehr Vinylidenreste aufweisende Monomere sowie zwei oder mehr Alkenylreste aufweisende Monomere. Besonders vorteilhaft sind dabei die Diester zweiwertiger Alkohole mit α,β-monoethylenisch ungesättigten Monocarbonsäuren, unter denen die Acryl und Methacrylsäure bevorzugt sind, die Diester zweiwertiger Carbonsäuren mit ethylenisch ungesättigten Alkoholen, sonstige Kohlenwasserstoffe mit zwei ethylenisch ungesättigten Gruppen oder die Diamide zweiwertiger Amine mit α,β-monoethylenisch ungesättigten Monocarbonsäuren.

Beispiele für derartige, zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate oder -methacrylate und Ethylenglykoldiacrylate oder -methacrylate, 1,2-Propylenglykoldimethacrylat, 1,3-Propylenglykol-dimethacrylat, 1,3-Butylenglykoldimethacrylat, 1,4-Butylenglykoldimethacrylate, Hexandioldiacrylat, Pentaerythroldiacrylat sowie Divinylbenzol, Vinylmethacrylat, Vinylacrylat, Vinylcrotonat, Allylmethacrylat, Allylacrylat, Diallylmaleat, Diallylfumarat, Diallylphthalat, Cyclopentadienylacrylat, Divinyladipat oder Methylenbisacrylamid.

Es können aber auch Monomere mit mehr als zwei Doppelbindungen eingesetzt werden, beispielsweise Tetraallyloxyethan, Trimethylolpropantriacrylat oder Triallylcyanurat.

Weitere mögliche Hilfsmonomere sind Monomere mit N-funktionellen, von N-Alkylolgruppen, insbesondere Methylolgruppen oder deren Derivaten verschiedenen Gruppen. Dazu zählen beispielsweise (Meth)-acrylamid, Allylcarbamat, Acrylnitril, Methacryl-nitril, Acryl-amidoglykolsäure, Acrylamidomethoxyessigsäuremethylester, N-(2,2-Di-methoxy-1-hydroxyethyl)-acrylamid, N-Dimethylaminopropyl(meth)-acrylamid, N-Methyl-(meth)acrylamid, N-Butyl(meth)-acrylamid, N-Cyclohexyl-(meth)-acrylamid, N-Dodecyl(meth)acrylamid, N-Benzyl-(meth)acrylamid, p-Hydroxyphenyl-(meth)-acrylamid, N-(3-Hydroxy-2,2-dimethyl-propyl)methacrylamid, Ethylimid-azolidon-(meth)acrylat, N-(Meth)acryloyloxy-ethylimidazolidin-1-on, N-(2-Methacrylamido-ethyl)imidazolin-2-on, N-[3-Allyloxy-2-hydroxypropyl]aminoethyl]imidazolin-2-on, N-Vinylformamid, N-Vinylpyrrolidon oder, N-Vinylethylenharnstoff.

Eine weitere Gruppe von Hilfsmonomeren bilden hydroxyfunktionelle Monomere, wie die C₁-C₉-Hydroxyalkylester der Acrylsäure oder der Methacrylsäure, wie n-Hydroxyethyl-, n-Hydroxypropyl- oder n-Hydroxybutylacrylat und -methacrylat sowie deren Addukte mit Ethylenoxid oder Propylenoxid.

Eine weitere Gruppe von Hilfsmonomeren bilden solche, die über Carbonylgruppen vernetzbar oder selbstvernetzend sind. Beispiele sind Diacetonacrylamid, Allylacetoacetat, Vinylacetoacetat sowie Acetoacetoxyethylacrylat oder -methacrylat.

Eine weitere Gruppe von Hilfsmonomeren besteht aus Silangruppen enthaltenden Monomeren z. B. Vinyltrialkoxysilane, wie Vinyltrimethoxysilan, Vinyltriethoxysilan, Alkylvinyldialkoxysilane oder (Meth)acryloxyalkyltrialkoxysilane, z. B. (Meth)acryloxyethyltrimethoxysilan, oder(Meth)acryloxypropyltrimethoxysilan.

Eine weitere Gruppe von Hilfsmonomeren besteht aus epoxygruppenhaltigen Monomeren wie beispielsweise Allylglycidylether, Methacrylglycidylether, Butadienmonoepoxide, 1,2-Epoxy-5-hexen, 1,2-Epoxy-7-octen, 1,2-Epoxy-9-decen, 8-Hydroxy-6,7-epoxy-1-octen, 8-Acetoxy-6,7-epoxy-1-octen, N-(2,3-Epoxy)-propylacrylamid, N-(2,3-Epoxy)-propylmethacrylamid, 4-Acrylamidophenylglycidylether, 3-Acrylamidophenylglycidylether, 4-Methacrylamidophenylglycidylether, 3-Methacrylamidophenylglycidylether, N-Glycidoxymethylacrylamid, N-Glycidoxypropylmethacrylamid, N-Glycidoxyethylacrylamid, N-Glycidoxyethylmethacrylamid, N-Glyctdoxy-propylacrylamid, N-Glycidoxypropylmethacrylamid, N-Glycidoxybutylacrylamid, N-Glycidoxybutylmeth-acrylamid, 4-Acrylamidomethyl-2,5-dimethylphenylglycidylether, 4-Methacrylamido-methyl-2,5-dimethyl-phenylglycidylether, Acrylamidopropyldimethyl-(2,3-epoxy)-propylammoniurnchlorid, Methacrylamidopropyldimethy-(2,3-epoxy)-propyl-ammoniumchlorid und Glycidylmethacrylat.

Neben Vinylester-Copolymeren enthalten die erfindungsgemäßen Dispersionen Schutzkolloide. Dabei handelt es sich um polymere Verbindungen, welche während der Emulsionspolymerisation zugegen sind und die Dispersion stabilisieren.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke- und Gelatinederivate oder von Acrylsäure, Methacrylsäure, Maleinsäure, Maleinsäureanhydrid, Methylvinylether, Styrol, 2-Acryl-amido-2-methylpropansulfonsäure und/oder 4-Styrolsulfonsäure abgeleitete Polymerisate und deren Alkalimetallsalze aber auch Polymere abgeleitet von N-Vinylpyrrolidon, N-Vinylcaprolactam, N-Vinylcarbazol, 1-Vinyl-imidazol, 2-Vinylimidazol, 2-Vinylpyridin, 4-Vinylpyridin, Acrylamid, Methacrylamid, amingruppentragenden Acrylaten, Methacrylaten, Acrylamiden und/oder Methacrylamiden. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Bevorzugtes Schutzkolloid ist Polyvinylalkohol.

Handelt es sich beim den Schutzkolloiden um Polyvinylalkohol, wird insbesondere Polyvinylalkohol vom Hydrolysegrad 60-100 Mol.-%, vorzugsweise 70 bis 98 Mol.-%, und Viskositäten der 4 Gew.-%igen wässrigen Lösungen bei 20 °C von 2 bis 70 mPa*s oder Gemische dieser Typen verwendet. Neben "homopolymerem" Polyvinylalkohol, d.h. nur aus Vinylalkohol- und restlichen Vinylacetatgruppen bestehendem Polyvinylalkohol, können copolymere bzw. funktionalisierte Polyvinylalkohole eingesetzt werden, beispielsweise Umsetzungsprodukte des Polyvinylalkohols mit Diketen oder mit Carboxylgruppen, Thiolgruppen, Formamidogruppen, Aminogruppen, Arylaminogruppen, Sulfatgruppen, Sulfonatgruppen, Phosphonatgruppen, quaternäre Ammoniumgruppen und andere funktionelle Gruppen tragende Typen von Polyvinylalkoholen.

Bezogen auf den Feststoffanteil der wässrigen Polyvinylesterdispersion beträgt der Anteil der Schutzkolloide vorzugsweise 1 bis 35 Gew.-%, insbesondere 2 bis 20 Gew.-%.

Zusätzlich zu den Schutzkolloiden kann die wässrige Polyvinylesterdispersion noch mit Emulgatoren stabilisiert sein. Dabei kann es sich um ionische, vorzugsweise anionische, oder insbesondere um nichtionische Netzmittel handeln. Eine Auflistung geeigneter Emulgatoren finden sich in Houben-Weyl, Methoden der organischen Chemie, Band XIV/I, Makromolekulare Stoffe, Georg- Thieme-Verlag, Stuttgart, 1961, S. 192-208).

Der Anteil der Emulgatoren kann bis zu 10 Gew.-%, bezogen auf den Feststoffanteil der Polymerdispersion betragen. Emulgatoren können bereits während der Polymerisation zugegen sein und/oder danach zugegeben werden.

Bevorzugt werden Schutzkolloid-stabilisierte wässrige Polyvinylesterdispersionen mit einem Gehalt von 0 bis 2 Gew. %, bezogen auf den Feststoffanteil der wässrigen Polyvinylesterdispersion, an ionischen und/oder nichtionischen Emulgatoren eingesetzt.

Die erfindungsgemäßen Polyvinylesterdispersionen weisen als Komponente c) mindestens eine Carbonsäure und/oder deren Salz mit mindestens einer weiteren heterofunktionellen Gruppe auf.

Bei den Verbindungen der Komponente c) kann es sich um aliphatische, cycloaliphatische, aromatische oder heteroaromatische Verbindungen handeln. Bevorzugte Komponenten c) sind Hydroxycarbonsäuren, Polycarbonsäuren, vorzugsweise Di-, Tri- oder Tetracarbonsäuren, Aminocarbonsäuren oder deren Salze.

Besonders bevorzugte Komponenten c) sind Polycarbonsäuren oder Hydroxycarbonsäuren. Diese werden insbesondere ausgewählt wird aus der Gruppe Oxalsäure, Malonsäure, Bernsteinsäure, Agaricinsäure, Citronensäure, 1,2,3-Propantricarbonsäure, Hemimellithsäure, Trimellithsäure, Trimesinsäure, Weinsäure, Äpfelsäure, Maleinsäure, Fumarsäure, Itaconsäure, Propandicarbonsäure, Butantricarbonsäure, Butantetracarbonsäure, Phtalsäure, Isophthalsäure, Terephthalsäure, Cyclohexantetracarbonsäure, Hexantricarbonsäure oder der Voll- oder Halbsalze dieser Carbonsäuren.

Die verwendete Menge der Komponente c) beträgt in der Regel 0,05 - 10 Gew.-% an der Polyvinylesterdispersion, vorzugsweise 0,2 - 5 Gew.-%.

Die erfindungsgemäßen Polyvinylesterdispersionen weisen als Komponente d) mindestens ein wasserlösliches Salz mit einem zweiwertigen Metallion, insbesondere eines Metallions eines Metalles der zweiten Haupt- oder Nebengruppe des Periodensystems der Elemente auf.

Unter dem Begriff "wasserlöslich" wird im Rahmen dieser Beschreibung eine Löslichkeit in Wasser bei 25°C von mindestens 1 g / l verstanden.

Bei Komponente d) kann es sich um ein wasserlösliches Salz eines Erdalkalimetalls handeln, beispielsweise um ein Magnesium-, Calcium- oder Strontiumsalz. Als wasserlösliches Salz eines Metalls der zweiten Nebengruppe kommen hauptsächlich Salze des Zinks in Frage. Weitere mögliche Salze mit zweiwertigen Metallionen leiten sich von zweiwertigern Zinn, Mangan oder Eisen ab.

Bei der Auswahl des Metallsalzes d) ist darauf zu achten, dass das Metallsalz praktisch keine Eigenfarbe aufweist, besonders bevorzugt farblos ist.

Ganz besonders bevorzugt werden wasserlösliche Magnesium- und/oder Zinksalze.

Es können Salze mit beliebigen Anionen eingesetzt werden, sofern es sich um wasserlösliche Salze handelt.

Beispiele für Salze sind Halogenide oder Carboxylate von Erdalkalimetallen, insbesondere von Magnesium, oder von Zink.

Die verwendete Menge der Komponente d) (gerechnet als wasserfreie Aktivsubstanz) beträgt in der Regel 0,05 - 10 Gew.-% der Polyvinylesterdispersion, vorzugsweise 0,1 - 5 Gew.-%,.

Die erfindungsgemäße wässrige Polyvinylesterdispersion kann weitere übliche Additive enthalten, die typischerweise bei Klebstoff-Formulierungen eingesetzt werden. Dazu zählen beispielsweise Filmbildehilfsmittel zur Erniedrigung der Mindestfilmbildetemperatur ("MFT-Erniedriger"), Weichmacher, Puffer, pH-Stellmittel, Dispergiermittel, Entschäumer, Füllstoffe, Farbstoffe, Pigmente, Silan-Kupplungsmittel, Verdickungsmittel, Viskositätsregler, Lösungsmittel und/oder Konservierungsmittel.

Eine Gruppe von Additiven stellen weitere vernetzend wirkende Verbindungen dar (externe Vernetzungsmittel), welche in niedermolekularer Form bzw. als Vernetzerharze zugesetzt werden können. Diese können den Effekt der Wasserfestigkeit noch weiter verbessern und können in den erfindungsgemäßen Polyvinylesterdispersionen eingesetzt werden, sofern sie die Filmverfärbung nicht negativ beeinflussen.

Als externe Vernetzungsmittel eignen sich beispielsweise Phenol-Formaldehyd-Harze, Resorcin-Formaldehyd-Harze, Melamin-Formaldehyd-Harze, Hydroxymethyl-substituierte Imidazolidinone oder Thioimidazolidinone, Hydroxymethyl-substituierte Pyrimidinone oder Hydroxymethyl-substituierte Triazinone oder Glycolurile oder deren Selbstkondensationsprodukte oder gemischte Kondensate aus zwei oder mehr der genannten Verbindungen, oder ein Gemisch aus zwei oder mehr der genannten Verbindungen. Beispielhaft genannt seien hierfür 1,3-bis(hydroxymethyl)-4-methoxy-4,5,5-trimethyl-2-Imidazolidinon, N,N'-Dimethylol-4-methoxy-5,5-dimethylpropyleneurea, N,N',N",N"'-Tetrakis(hydroxymethyl)glycoluril, 4,5-Dihydroxy-1,3-bis(methoxymethyl)-2-imidazolidinon,4,5-Dihydroxy-1,3-bis(hydroxymethyl)-imidazolidin-2-on ,Tetrahydro-1,3-bis(hydroxymethyl)-4-methoxy-5,5-dimethyl-pyrimidin-2(1 H)- on ,4,5-Dihydroxy-1,3-dimethylol-2-imidazolidinon, 4,5-Dihydroxy-1,3-dimethyl-2-imidazolidinon, Tetrahydro-1,3-bis(hydroxymethyl)-4-hydroxy-5,5-dimethyl-(1H)-pyrimidin-2-on, (=1,3-Dimethylol-4-methoxy-5,5-dimethylpropylenharnstoff), Tetrahydro-1,3-bis(hydroxymethyl)-4-alkoxy-5,5-dimethyl-(1H)-pyrimidin-2- on und N,N',N",N"'-Tetrakis(hydroxymethyl)glycoluril. Bevorzugt sind ebenfalls die in der EP-A 1 505 085 erwähnten partiell oder vollständig veretherten Harze auf Basis methylolierter Ethylenharnstoffe, Propylenharnstoffe, Glyoxaldiharnstoffe, Malondialdehyddiharnstoffe oder deren Kombinationen.

Eine weiterhin hervorragend geeignete Gruppe von externen Vernetzungsmitteln stellen Polyaldehyde, wie aromatische Kohlenwasserstoffe mit zwei bis sechs Aldehydgruppen, cycloaliphatische Kohlenwasserstoffe mit zwei bis sechs Aldehydgruppen, Dialdehydstärken oder andere wasserlösliche Polyaldehyde, und ebenso die zumindest teilweise maskierten Polyaldehyde der EP-A-686,682 dar. Weitere hervorragend geeignete externe Vernetzungsmittel sind freie oder zumindest teilweise maskierte Polyisocyanate. Diese Verbindungen können in Kombination mit den erfindungsgemäß eingesetzten Vinylester-Copolymerisaten zu einer höheren Vernetzungsdichte beitragen.

In einer besonders bevorzugten Ausführungsform besteht die erfindungsgemäße wässrige Polyvinylesterdispersion aus den oben genannten Komponenten a), b), c) und d) und gegebenenfalls aus weiteren üblichen Additiven e), die ausgewählt werden aus der Gruppe der Filmbildehilfsmittel zur Erniedrigung der Mindestfilmbildetemperatur, der Weichmacher, der Puffer, der pH-Stellmittel, der Dispergiermittel, der Entschäumer, der Füllstoffe, der Farbstoffe, der Pigmente, der Silan-Kupplungsmittel, der Verdickungsmittel, der Viskositätsregler, der Lösungsmittel, der Konservierungsmittel, der weiteren vernetzend wirkenden Verbindungen sowie der Kombinationen von zwei oder mehreren dieser Additive.

Besonders bevorzugt werden wässrige Polyvinylesterdispersionen aus den oben genannten Komponenten a), b), c) und d) und aus weiteren üblichen oben genannten Additiven e), wobei die vernetzend wirkenden Verbindungen ausgewählt werden aus der Gruppe der Phenol-Formaldehyd-Harze, der Resorcin-Formaldehyd-Harze, der Melamin-Formaldehyd-Harze, der Hydroxymethyl-substituierten Imidazolidinone, der Hydroxymethyl-substituierten Thioimidazolidinone, der Hydroxymethyl-substituierte Pyrimidinone, der Hydroxymethyl-substituierten Triazinone, der Hydroxymethyl-substituierten Glycolurile oder deren Selbstkondensationsprodukte oder gemischten Kondensate aus zwei oder mehr der genannten Verbindungen, der Polyaldehyde, der zumindest teilweise maskierten Polyaldehyde, der freien oder zumindest teilweise maskierten Polyisocyanate sowie der Kombinationen von zwei oder mehreren dieser vernetzend wirkenden Verbindungen.

Die erfindungsgemäßen Polyvinylesterdispersionen können als Ein- oder als Mehrkomponentenzusammensetzungen formuliert werden. Bevorzugt sind einkomponentige Zusammensetzungen.

Die erfindungsgemäßen Polyvinylesterdispersionen besitzen einen sauren pH-Wert. Dieser liegt in einem Bereich, in dem die N-Alkyolgruppen, insbesondere N-Methylolgruppen oder deren Derivate im Vinylester-Copolymeren mit Bestandteilen der Zusammensetzung zu säurekatalysierten Vernetzungsreaktionen befähigt sind. Dieser pH-Bereich liegt vorzugsweise zwischen 2 und 6, insbesondere zwischen 2,5 und 4,5.

Üblicherweise reichen die Zusätze der erfindungsgemäßen Komponenten c) und d) aus, um den pH-Wert schon im geeigneten Bereich einzustellen. Der Zusatz weiterer acider Komponenten ist möglich, sofern diese die thermische Farbneutralität nicht negativ beeinflussen. Vorzugsweise sind ausgewählte Lewis-Säuren- oder organische oder anorganische Brφnsted-Säuren zu verwenden. Vorzugsweise geeignete Brφnsted-Säuren weisen einen pKₛ-Wert von <2,5 auf, beispielsweise Salzsäure, Schwefelsäure, Salpetersäure, Perchlorsäure, p-Toluolsulfonsäure, insbesondere Phosphorsäure.

Der Feststoffgehalt der erfindungsgemäßen wässrigen Polyvinylesterdispersion beträgt vorzugsweise 20 bis 70 Gew.-%, insbesondere 30 bis 65 Gew.-%.

Die Herstellung der wässrigen Polyvinylesterdispersion kann unter den üblichen kontinuierlichen oder diskontinuierlichen Verfahrensweisen der radikalischen Emulsionspolymerisation vorgenommen werden.

Die Durchführung einer radikalisch initiierten wässrigen Emulsionspolymerisation von ethylenisch ungesättigten Monomeren ist vielfach vorbeschrieben und dem Fachmann daher hinreichend bekannt (vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. I, Seiten 33 bis 415, Chapman & Hall, 1997; H. Warson, The Applications of Synthetic Resin Emulsions, Seiten 49 bis 244, Ernest Bonn. Ltd.. London, 1972; D. Diederich, Chemie in unserer Zeit 1990, 24, Seiten 135 bis 142, Verlag Chemie, Weinheim; J. Piirma, Emulsion Polymerisation, Seiten I bis 287, Academic Press, 1982; F. Hölscher, Dispersionen synthetischer Hochpolymerer, Seiten I bis 160. Springer-Verlag, Berlin, 1969 und die DE-A 40 03 422). Sie erfolgt üblicherweise so, daß man die ethylenisch ungesättigten Monomeren, häufig unter Mitverwendung von Dispergierhilfsmitteln, in wäßrigem Medium dispers verteilt und mittels wenigstens eines radikalischen Polymerisationsinitiators polymerisiert.

Hierbei kommen wasserlösliche und/oder öllösliche Initiatorsysteme, wie Peroxodisulfate, Azoverbindungen, Wasserstoffperoxid, organische Hydroperoxide oder Dibenzoylperoxid, zum Einsatz. Diese können entweder für sich oder in Kombination mit reduzierenden Verbindungen wie Fe(II)-Salzen, Natriumpyrosulfit, Natriumhydrogensulfit, Natriumsulfit, Natriumdithionit, Natriumformaldehydsulfoxylat, Ascorbinsäure als Redoxkatalysatorsystem verwendet werden.

Die Schutzkolloide und gegebenenfalls Emulgatoren können vor oder während der Polymerisation zugegeben werden. Eine zusätzliche Nachgabe von polymeren Stabilisatoren und/oder von Emulgatoren ist ebenfalls möglich. Nach Abschluß der Polymerisation werden gegebenenfalls weitere Verfahrensschritte, wie die chemische und/oder physikalische Entmonomerisierung, durchgeführt. Zu dieser Dispersion werden dann vorzugsweise nach Abschluss der Polymerisation oder gegebenenfalls weiteren Verfahrensschritten die Komponenten c) und d) zugegeben. Eine Zugabe der Komponenten zu früheren Prozessschritten bei der Herstellung der Polyvinylesterdispersion ist jedoch auch möglich. Die Komponenten c) und d) können auch vor, während oder nach der Formulierung mit weiteren Rezepturspezifischen Additiven zugeben werden. Die Reihenfolge ist hier nicht kritisch, sollte aber auf die jeweilige Rezeptur abgestimmt werden.

Die erfindungsgemäßen wässrigen Polyvinylesterdispersionen lassen sich beispielsweise zu Produkten mit sehr hoher Kaltwasserbeständigkeit bei gleichzeitiger sehr guter Farbstabilität der Verklebungen verarbeiten.

Aus den erfindungsgemäßen Polyvinylesterdispersionen hergestellte Klebstoffzusammensetzungen genügen in der Regel der Prüfnorm DIN EN 204 D3 und übertreffen diese häufig sogar.

Im Gegensatz zu vorbekannten Klebstoffsystemen wird keine Verfärbung bei Verklebungen in der Hitze und/oder unter dem Einfluss aktinischer Strahlung beobachtet.

Gegenstand der Erfindung ist weiterhin die Verwendung der erfindungsgemäßen wässrigen Polyvinylesterdispersion zum Verkleben oder Beschichten beliebiger Substrate, vorzugsweise von porösen und semiporösen Substraten.

Die spezielle Eignung der erfindungsgemäßen wässrigen Polyvinylesterdispersionen liegt in der Anwendung als wasserresistenter Klebstoff insbesondere für cellulosische Substrate wie Holz, insbesondere Massivholz oder von Holz abgeleiteten Materialien und Werkstoffen, beispielsweise Furnieren, Sperrholz, Schichtholz, Lagenholz, Kunstharzpressholz, Verbundplatten oder Holzfaserwerkstoffen wie porösen, diffusionsoffenen, harten oder mitteldichten Holzfaserplatten (MDF) oder Kunststoffbeschichteten dekorativen Holzfaserplatten. Die Klebstoffzusammensetzungen eignen sich für die manuelle oder maschinelle Applikation sowie insbesondere für Anwendungen, in denen die Klebfugen durch hochfrequente Wechselströme oder hydraulische Heißpressen gehärtet werden.

Die spezielle Eignung liegt im Heißverkleben dünnwandiger, hochwertiger Edel- oder Deckfurniere auf geeignetes Plattenmaterial.

Weitere Anwendungsbeispiele sind die Herstellung von wasserfesten Verklebungen und Beschichtungen von Papier, Pappe, Wellpappe, Schaumstoff, Zement, Leder, Textil oder Pressschichtstoffen, der Einsatz als Bindemittel für Textil und Non-Woven (sog. Engineered Fabrics) sowie im Textildruck und als Textilappretur, in der Verwendung als Bindemittel für Glasfasern, welche beispielsweise zur Verfestigung von Kunststoff-Fliesen, Formkörpern und als Dämmmaterial verwendet werden oder als Bindemittel für Keramik.

Die nachfolgenden Beispiele dienen der Erläuterung der Erfindung. Die in den Beispielen angegebenen Teile und Prozente beziehen sich auf das Gewicht, soweit nicht anders vermerkt.

### Basisdispersion für erfindungsgemäße Beispiele und Vergleichsbeispiel V1-V3

In einer 10 I Glasreaktoranlage mit Rührvorrichtung und Zulaufmöglichkeiten wurde unter Verwendung von 7 Gew.-% (bezogen auf das Gewicht der Gesamtmonomeren) an teilverseiftem Polyvinylalkohol als Stabilisierungsmittel zunächst eine Polymerdispersion vom Feststoffgehalt 52 % hergestellt. Der verwendete Polyvinylalkohol enthielt zu 25 % solchen vom Hydrolysegrad 92 mol-% und zu 75 % solchen vom Hydrolysegrad 88 mol-%.

Zunächst wurden ca. 52 % der Gesamtmenge des verwendeten Vinylacetats unter Initiierung von 0,02 % (bezogen auf die Gesamtmenge des Vinylacetats) an Ammoniumperoxodisulfat bei einer Reaktionstemperatur von 65°C bis 85 °C polymerisiert. Anschließend dosierte man das restliche Vinylacetat zusammen mit 0,5 Gew.-% Methacrylsäure und parallel dazu eine wässrige Lösung von 0,57 % N-Methylolacrylamid zu. Die Summe dieser Monomeren bildete zusammen 100 %. Während dieser Phase dosierte man noch 0,01 % Ammoniumperoxodisulfat (bezogen auf die Gesamtmenge des Vinylacetats) parallel zu den anderen Zuläufen zu, hielt die Reaktionstemperatur durch Regelung der Zuläufe und die Mantelkühlung bei 78-82 °C und gab dieselbe Menge an Ammoniumperoxodisulfat am Ende des Zulaufs noch einmal zu. Anschließend entmonomerisierte man mit tert.-Butylhydroperoxid / Natriumsulfoxylat bei 60 - 80 °C nach und setzte 0,5 % (auf Gesamtmonomer) Natriumacetat-trihydrat als Puffer zu.

Der pH-Wert lag bei 5,2. Der Gehalt an restmonomeren Vinylacetat betrug 370 ppm. Die Viskosität lag bei 35.200 mPa*s, gemessen mit einem Brookfield-RV Viskosimeter (Spindel 6, 20 U/Min. 23 °C).

### Beispiel 1 (erfindungsgemäß)

Die zuvor entschäumte Basisdispersion wurde folgendermaßen formuliert

| | |
|---|---|
| Basisdispersion | 100 GT |
| Butyldiglykolacetat | 2,1 GT |
| Magnesiumchlorid * 6 H₂O | 1,6 GT |
| in deionisiertem Wasser | 3.0GT |
| Citronensäuremonohydrat | 1,0 GT |
| in deionisiertem Wasser | 1,0 GT |

Die resultierende Dispersion wurde mit deionisiertem Wasser auf eine Viskosität (Brookfield-RV Viskosimeter (Spindel 6, 20 U/Min. 23 °C)) von 13.750 mPa*s eingestellt und hatte einen pH-Wert von 3,0.

### Beispiel 2 (erfindungsgemäß)

Die zuvor entschäumte Basisdispersion wurde folgendermaßen formuliert

| | |
|---|---|
| Basisdispersion | 100 GT |
| Butyldiglykolacetat | 2,1 GT |
| NaOH 10 %ig | 2,3 GT |
| Zink(II)chlorid | 2,1 GT |
| in deionisiertem Wasser | 3,0GT |
| Citronensäuremonohydrat | 1,0 GT |
| in deionisiertem Wasser | 1,0 GT |

Die resultierende Dispersion wurde mit deionisiertem Wasser auf eine Viskosität (Brookfield-RV Viskosimeter (Spindel 6, 20 U/Min. 23 °C)) von 9.600 mPa*s eingestellt und hatte einen pH-Wert von 3,0.

### Vergleichsbeispiel V1 (ohne Komponente c))

Die zuvor entschäumte Basisdispersion wurde folgendermaßen formuliert

| | |
|---|---|
| Basisdispersion | 100 GT |
| Butyldiglykolacetat | 2,1 GT |
| Magnesiumchlorid * 6 H₂O | 1,6 GT |
| in deionisiertem Wasser | 3,0GT |
| 5 %ige Salzsäure (auf pH ca. 3) | 2,9 GT |

Die resultierende Dispersion wurde mit deionisiertem Wasser auf eine Viskosität (Brookfield-RV Viskosimeter (Spindel 6, 20 U/Min. 23 °C)) von 13.450 mPa*s eingestellt und hatte einen pH-Wert von 3,0.

### Vergleichsbeispiel V2 (ohne Komponente d)

Die zuvor entschäumte Basisdispersion wurde folgendermaßen formuliert

| | |
|---|---|
| Basisdispersion | 100 GT |
| Butyldiglykolacetat | 2,1 GT |
| deion. Wasser | 3,0 GT |
| Citronensäuremonohydrat | 1,0 GT |
| in deionisiertem Wasser | 1,0 GT |

Die resultierende Dispersion wurde mit deionisiertem Wasser auf eine Viskosität (Brookfield-RV Viskosimeter (Spindel 6, 20 U/Min. 23 °C)) von 12.950 mPa*s eingestellt und hatte einen pH-Wert von 2,9.

### Vergleichsbeispiel V3 (ohne Komponenten c) und d)

Die zuvor entschäumte Basisdispersion wurde folgendermaßen formuliert

| | |
|---|---|
| Basisdispersion | 100 GT |
| Butyldiglykolacetat | 2,1 GT |
| deion. Wasser | 3,0GT |
| 5 %ige Salzsäure (auf pH ca. 3) | 2,9 GT |

Die resultierende Dispersion wurde mit deionisiertem Wasser auf eine Viskosität (Brookfield-RV Viskosimeter (Spindel 6, 20 U/Min. 23 °C)) von 13.450 mPa*s eingestellt und hatte einen pH-Wert von 3,0.

An den auf diese Weise erhaltenen Produkten wurden Normverklebungen an Buchenholz bei verschiedenen Temperaturen sowie eine visuelle Beurteilung des thermischen Verfärbungsverhaltens bei verschiedenen Temperaturen vorgenommen.

### Bestimmung der Naßklebfestigkeiten

Die Ausprüfung der formulierten Dispersionen erfolgte an Buchenholzprüflingen (EN 205) gemäß der Prüfnorm DIN EN 204/D3, Prüffolge 3. In diesem Test wird die Beständigkeit des Klebstoff-Films gegenüber viertägiger Kalt-Wasserbelastung getestet. Die erste Serie der Verklebungen wurde zunächst bei Raumtemperatur unter den in Tabelle 1 aufgeführten Bedingungen durchgeführt.

**Tabelle 1: Bedingungen für die Normverklebung nach DIN EN 204 D3, Prüffolge 3, bei Raumtemperatur**

| | Leimauftrag: | 150 ± 20 g/m² beidseitiger Auftrag |
|---|---|---|
| | Offene Wartezeit: | 3 Minuten |
| | Geschlossene Wartezeit: | 3 Minuten |
| | Preßzeit: | 2 Stunden |
| | Preßdruck: | 0,7 ± 0,1 N/mm² |
| | Anzahl Prüfkörper pro Prüffolge: | 10 |
| | Prüfung nach | 7 Tage Normalklima*) |
| | Lagerungsfolge gemäß | 4 Tage kaltes Wasser |
| | DIN EN 204 D4/5 | Anschließend Test im nassen Zustand |
| | Prüftemperatur: | 23 °C ± 2 °C |
| | Vorschubgeschwindigkeit: | 50 mm/Min. |
| Die Einordnung in die Beanspruchungsgruppe D3/3 erfolgte bei einer Reißfestigkeit von >= 2 N/mm² | | |

| | | |
|---|---|---|
| *> 23 ± 2 ° C und 50 ± 5 % relative Luftfeuchte | | |

In weiteren Versuchsserien wurden die formulierten Dispersionen an Buchenholzprüflingen (EN 205) auf einer beheizbaren hydraulischen Presse heißverklebt, anschließend auf Raumtemperatur abgekühlt und im Folgenden analog der Lagerungsfolge 3 gemäß der Prüfnorm DIN EN 204/D3 unterzogen. Die Heißverklebung innerhalb der Versuchsserien wurden jeweils bei drei verschiedenen Temperaturen (100 °C, 120 °C und 140 °C) durchgeführt. Die Bedingungen für die Verklebungen und die Lagerung sind in Tabelle 2 aufgeführt.

**Tabelle 2: Bedingungen für die Heißverklebung auf einer beheizbaren hydraulischen Presse angelehnt an DIN EN 204 D3, Prüffolge 3**

| | Leimauftrag: | 150 ± 20 g/m² beidseitiger Auftrag |
|---|---|---|
| | Offene Wartezeit | 3 Minuten (bei Raumtemperatur) |
| | Geschlossene Wartezeit | 3 Minuten (bei Raumtemperatur) |
| | Preßtemperatur | 100, 120, 140 °C |
| | Preßzeit bei Testtemperatur | 5 Minuten |
| | Pressdruck: | 0,7 ± 0,1 N/mm² |
| | Anzahl Prüfkörper pro Prüffolge: | 10 |
| | Prüfung nach | 7 Tage Normalklima*) |
| | Lagerungsfolge gemäß | 4 Tage kaltes Wasser |
| | DIN EN 204 D4/5: | Anschließend Test im nassen Zustand |
| | Prüftemperatur: | 23 °C ± 2 °C |
| | Vorschubgeschwindigkeit: | 50 mm/Min. |
| Die Einordnung in die Beanspruchungsgruppe D3/3 erfolgte bei einer Reißfestigkeit von >= 2 N/mm² | | |

| | | |
|---|---|---|
| *> 23 ± 2 ° C und 50 ± 5 % relative Luftfeuchte | | |

### Test der thermischen Verfärbung auf Buchenholz

Von den formulierten Dispersionen wurden mit einer 400 µm Kastenrakel ca. 200 µm dicke Filme auf ein Buchenholzbrett aufgezogen. Die Filme wurden zunächst bei Raumtemperatur 24 h getrocknet. Anschließend wurden die Brettchen für jeweils 5 Minuten in einem Umlufttrockenschrank bei der angegebenen Prüftemperatur (100, 120, 140 °C) thermisch behandelt, anschließend abgekühlt und die Verfärbung visuell beurteilt.

Handelsübliche Klebstoffdispersionen der Kategorie D3, welche mit Aluminiumsalzen katalysiert werden, würden sich unter diesen Bedingungen oberhalb 100 °C dunkelbraun, ab 140°C bis hin zu schwarz verfärben.

Die erhaltenen Versuchsergebnisse sind in Tabelle 3 aufgelistet.

**Tabelle 3**

| Beispiel | Prüf-temperatur °C | Naßklebfestigkeit DIN EN 204 D3/3 (N/mm²) | Filmverfärbung |
|---|---|---|---|
| 1 | Raumtemp. | 1,7 | farblos |
| 2 | Raumtemp. | 1,5 | farblos |
| V1 | Raumtemp. | 0,1 | farblos |
| V2 | Raumtemp. | 0 | farblos |
| V3 | Raumtemp: | 0 | farblos |
| 1 | 100 °C | 3,4 | farblos |
| 2 | 100 °C | 2,3 | farblos |
| V1 | 100 °C | 1,6 | farblos |
| V2 | 100 °C | 1,8 | farblos |
| V3 | 100 °C | 0,9 | farblos |
| 1 | 120 °C | 3,3 | farblos |
| 2 | 120 °C | 3,8 | farblos |
| V1 | 120 °C | 1,4 | farblos |
| V2 | 120 °C | 2,1 | farblos |
| V3 | 120 °C | 0,9 | farblos |
| 1 | 140 °C | 5,3 | farblos |
| 2 | 140 °C | 5,1 | farblos |
| V1 | 140 °C | 2,3 | farblos |
| V2 | 140 °C | 3,5 | farblos |
| V3 | 140 °C | 1,9 | farblos |

Aus diesen Ergebnissen wird deutlich, dass ein synergistischer Effekt aus der erfindungsgemäßen Kombination der Komponenten c) und d) resultiert, wohingegen das Fehlen mindestens einer dieser Komponenten zu deutlich schwächer ausgeprägten Klebefestigkeiten führt, wie an den Vergleichsbeispielen V1 bis V3 ersehbar ist.

### Test der thermischen Verfärbung bei längerer Belastung auf verschiedenen Holzarten

Von den formulierten Dispersionen wurden mit einer 800 µm Kastenrakel ca. 400 µm dicke Filme auf Zuschnitte verschiedener Holzarten aufgezogen. Die Filme wurden ohne Trocknung für jeweils 45 Minuten in einem Umlufttrockenschrank bei 90 °C thermisch behandelt, anschließend abgekühlt und die Verfärbung visuell beurteilt. Als Vergleichsbeispiel V4 wurde Mowilith^{®} LDL 2555 W, Handelsware der Celanese Emulsions GmbH, eingesetzt.

Als Vergleichsbeispiel V5 wurde ein im Handel erhältliches Wettbewerbsprodukt in Form eines Holzklebstoffes der Beanspruchungsgruppe D3 eingesetzt, der im Handel als verfärbungsarm angeboten wird.

Die Ergebnisse sind in Tabelle 4 aufgelistet.

**Tabelle 4: Verfärbung auf verschiedenen Holzarten**

| Beispiel | Holzart | Filmverfärbung |
|---|---|---|
| 2 | Ahorn | farblos |
| V4 | Ahorn | dunkelbraun |
| V5 | Ahorn | ocker |
| 2 | Eiche | ocker |
| V4 | Eiche | dunkelbraun |
| V5 | Eiche | hellbraun |
| 2 | Esche | farblos |
| V4 | Esche | hellbraun |
| V5 | Esche | gelblich |
| 2 | Fichte | farblos |
| V4 | Fichte | dunkelbraun |
| V5 | Fichte | ocker |
| 2 | Kiefer | farblos |
| V4 | Kiefer | dunkelbraun |
| V5 | Kiefer | farblos |
| 2 | Lärche | farblos |
| V4 | Lärche | dunkelbraun |
| V5 | Lärche | farblos |
| 2 | Pappel | farblos |
| V4 | Pappel | dunkelbraun |
| V5 | Pappel | grau |
| 2 | Meranti | farblos |
| V4 | Meranti | dunkelbraun |
| V5 | Meranti | grünlich |
| 2 | Limba | leicht gelblich |
| V4 | Limba | dunkelbraun |
| V5 | Limba | hellbraun |

### Bestimmung der UV-und Lichtbeständigkeit

Die formulierten Dispersionen wurden mittels 50 µm Spaltrakel auf Holzbrettchen der jeweilig verwendeten Holzart aufgetragen und 12 Std. bei Raumtemperatur getrocknet. Danach wurde die Hälfte des Filmes mittels Aluminiumfolie abgedeckt und die Holzplatte 2 Stunden lang im NOVASOLTEST Lichtbeständigkeitsprüfgerät der Firma Heraeus (1000 Watt Strahler - im Wellenlängenbereich zw. 300 u. 800 nm) ohne Verwendung eines Filters bestrahlt. Der Abstand Lampe - Prüfkörper betrug 70 cm) Die Beurteilung der belichteten Filmhälften erfolgt visuell. Die erhaltenen Ergebnisse finden sich in Tabelle 5.

**Tabelle 5: Verfärbung auf verschiedenen Holzarten nach Bestrahlung**

| Beispiel | Holzart | Filmverfärbung |
|---|---|---|
| 2 | Buche | gelblich |
| V4 | Buche | braun |
| V5 | Buche | gelblich |
| 2 | Ahorn | farblos |
| V4 | Ahorn | braun |
| V5 | Ahorn | hellbraun |

## Patentansprüche

1. Wässrige Polyvinylesterdispersion enthaltend
a) mindestens ein Vinylester-Copolymer abgeleitet von mindestens einem Vinylester einer Monocarbonsäure, mindestens einem ethylenisch ungesättigtem und N-Alkylolgruppen und/oder Derivate von diesen Gruppen enthaltenden Monomer und gegebenenfalls weiteren Comonomeren,
b) mindestens ein Schutzkolloid,
c) mindestens eine Carbonsäure und/oder deren Salz, welche mindestens einen weiteren Rest ausgewählt aus der Gruppe der Hydroxyl-, Amino-, Carboxyl-, Carbonsäureester- und Carbonsäureamidreste enthält, und
d) mindestens ein wasserlösliches Salz mit einem zweiwertigen Metallion.

2. Wässrige Polyvinylesterdispersion nach Anspruch 1, **dadurch gekennzeichnet, dass** das Vinylester-Copolymer einpolymerisierte Gruppen enthält, die abgeleitet sind von ethylenisch ungesättigten Monomeren mit N-Alkylolgruppen, insbesondere N-Methylolgruppen und die in einer Menge von 0,1 bis 10 Gew. %, bezogen auf die Gesamtmonomeren, vorliegen.

3. Wässrige Polyvinylesterdispersion nach Anspruch 2, **dadurch gekennzeichnet, dass** das Vinylester-Copolymer zusätzlich weitere Struktureinheiten enthält, die sich ableiten von Comonomeren, welche mit Vinylestern und mit N-Methylolgruppen enthaltenden ethylenisch ungesättigten Monomeren copolymerisierbar sind, vorzugsweise von Acrylsäureestern und/oder von Methacrylsäureestern und/oder von ethylenisch ungesättigten Mono- oder Dicarbonsäuren und/oder von ethylenisch ungesättigten Sulfonsäuren abgeleitete Struktureinheiten.

4. Wässrige Polyvinylesterdispersion nach einem der Ansprüche 1 bis 3, **dadurch gekennzeichnet, dass** das Schutzkolloid Polyvinylalkohol ist.

5. Wässrige Polyvinylesterdispersion nach einem der Ansprüche 1 bis 4, **dadurch gekennzeichnet, dass** Komponente c) ausgewählt wird aus der Gruppe der Hydroxycarbonsäuren, der Dicarbonsäuren, der Tricarbonsäuren, der Tetracarbonsäuren, der Aminocarbonsäuren oder der Salze dieser Säuren.

6. Wässrige Polyvinylesterdispersion nach Anspruch 5, **dadurch gekennzeichnet, dass** die Hydroxycarbonsäure Citronensäure oder ein Salz der Citronensäure ist.

7. Wässrige Polyvinylesterdispersion nach einem der Ansprüche 1 bis 6, **dadurch gekennzeichnet, dass** das wasserlösliche Salz mit einem zweiwertigen Metallion ein Salz mit einem Metallion eines Metalles der zweiten Haupt- oder Nebengruppe des Periodensystems ist, vorzugsweise ein Magnesiumsalz oder ein Zinksalz, ganz besonders bevorzugt ein Magnesium- oder Zinkhalogenid oder ein Magnesium- oder Zinkcarboxylat.

8. Wässrige Polyvinylesterdispersion nach einem der Ansprüche 1 bis 7, **dadurch gekennzeichnet, dass** diese einen Feststoffgehalt von 30 - 65 Gew.-% aufweist, dass das Vinylester-Copolymer 0,1 bis 10 Gew.-%, bezogen auf die Gesamtmonomeren, an von N-Methylolgruppen enthaltenden Comonomeren abgeleitete Struktureinheiten aufweist, insbesondere von N-Methylolacrylamid und/oder von N-Methylolmethacrylamid abgeleitete Struktureinheiten, dass das Vinylester-Copolymer gegebenenfalls bis zu 10 Gew.-%, bezogen auf die Gesamtmonomeren, an von Carbonsäuregruppen enthaltenden Comonomeren abgeleitete Struktureinheiten aufweist, insbesondere von Acrylsäure und/oder von Methacrylsäure abgeleitete Struktureinheiten, und dass die Menge des Schutzkolloids, vorzugsweise des Polyvinylalkohols, 0,1 bis 30 Gew-%, bezogen auf die Gesamtheit aller zur Herstellung des Polyvinylesters eingesetzten Monomeren, beträgt.

9. Wässrige Polyvinylesterdispersion nach einem der Ansprüche 1 bis 8, **dadurch gekennzeichnet, dass** die Carbonsäure der Komponente c) ausgewählt wird aus der Gruppe Oxalsäure, Malonsäure, Bernsteinsäure, Agaricinsäure, Citronensäure, 1,2,3-Propantricarbonsäure, Hemimellithsäure, Trimellithsäure,
Trimesinsäure, Weinsäure, Äpfelsäure, Maleinsäure, Fumarsäure, Itaconsäure, Propandicarbonsäure, Butantri-carbonsäure, Butantetracarbonsäure, Phtalsäure, Isophthalsäure, Terephthalsäure, Cyclohexantetracarbonsäure, Hexantricarbonsäure oder der Voll- oder Halbsalze dieser Carbonsäuren.

10. Wässrige Polyvinylesterdispersion nach Anspruch 1, **dadurch gekennzeichnet, dass** diese aus den Komponenten a), b), c) und d) gemäß Anspruch 1 besteht und gegebenenfalls aus weiteren üblichen Additiven e), die ausgewählt werden aus der Gruppe der Filmbildehilfsmittel zur Erniedrigung der Mindestfilmbildetemperatur, der Weichmacher, der Puffer, der pH-Stellmittel, der Dispergiermittel, der Entschäumer, der Füllstoffe, der Farbstoffe, der Pigmente, der Silan-Kupplungsmittel, der Verdickungsmittel, der Viskositätsregler, der Lösungsmittel, der Konservierungsmittel, der weiteren vernetzend wirkenden Verbindungen sowie der Kombinationen von zwei oder mehreren dieser Additive.

11. Wässrige Polyvinylesterdispersion nach Anspruch 10 **dadurch gekennzeichnet, dass** die vernetzend wirkenden Verbindungen ausgewählt werden aus der Gruppe der Phenol-Formaldehyd-Harze, der Resorcin-Formaldehyd-Harze, der Melamin-Formaldehyd-Harze, der Hydroxymethyl- substituierten Imidazolidinone, der Hydroxymethyl-substituierten Thioimidazolidinone, der Hydroxymethyl-substituierte Pyrimidinone, der Hydroxymethyl-substituierten Triazinone, der Hydroxymethyl-substituierten Glycolurile oder deren Selbstkondensationsprodukte oder gemischten Kondensate aus zwei oder mehr der genannten Verbindungen, der Polyaldehyde, der zumindest teilweise maskierten Polyaldehyde, der freien oder zumindest teilweise maskierten Polyisocyanate sowie der Kombinationen von zwei oder mehreren dieser vernetzend wirkenden Verbindungen.

12. Verwendung der wässrigen Polyvinylesterdispersion nach einem der Ansprüche 1 bis 11 zum Beschichten und/oder Verkleben von Substraten, vorzugsweise von porösen und/oder semiporösen Substraten.

13. Verwendung nach Anspruch 12, **dadurch gekennzeichnet, dass** das poröse oder semiporöse Substrat Holz ist, das vorzugsweise bei der Herstellung von Furnieren eingesetzt wird.

14. Verwendung der wässrigen Polyvinylesterdispersion nach einem der Ansprüche 1 bis 11 als Binder für textile Flächengebilde, insbesondere für Nonwovens.

15. Verwendung der wässrigen Polyvinylesterdispersion nach einem der Ansprüche 1 bis 11 als Bindemittel für Glasfasern.

## Claims

1. An aqueous polyvinyl ester dispersion comprising
a) at least one vinyl ester copolymer derived from at least one vinyl ester of a monocarboxylic acid, at least one ethylenically unsaturated monomer containing N-alkylol groups and/or derivatives of these groups, and, if desired, further comonomers,
b) at least one protective colloid,
c) at least one carboxylic acid and/or salt thereof, containing at least one further radical selected from the group consisting of hydroxyl, amino, carboxyl, carboxylic ester, and carboxylic amide radicals, and
d) at least one water-soluble salt with a divalent metal ion.

2. The aqueous polyvinyl ester dispersion as claimed in claim 1, wherein the vinyl ester copolymer comprises copolymerized groups derived from ethylenically unsaturated monomers with N-alkylol groups, especially N-methylol groups, and present in an amount of 0.1 % to 10% by weight, based on the total monomers.

3. The aqueous polyvinyl ester dispersion as claimed in claim 2, wherein the vinyl ester copolymer additionally comprises further structural units which derive from comonomers which are copolymerizable with vinyl esters and with ethylenically unsaturated monomers containing N-methylol groups, preferably structural units derived from acrylic esters and/or from methacrylic esters and/or from ethylenically unsaturated monocarboxylic or dicarboxylic acids and/or from ethylenically unsaturated sulfonic acids.

4. The aqueous polyvinyl ester dispersion as claimed in any of claims 1 to 3,
wherein the protective colloid is polyvinyl alcohol.

5. The aqueous polyvinyl ester dispersion as claimed in any of claims 1 to 4,
wherein component c) is selected from the group consisting of hydroxycarboxylic acids, dicarboxylic acids, tricarboxylic acids, tetracarboxylic acids, aminocarboxylic acids, and the salts of these acids.

6. The aqueous polyvinyl ester dispersion as claimed in claim 5, wherein the hydroxycarboxylic acid is citric acid or a salt of citric acid.

7. The aqueous polyvinyl ester dispersion as claimed in any of claims 1 to 6,
wherein the water-soluble salt with a divalent metal ion is a salt with a metal ion of a metal from the second main or transition group of the Periodic Table, preferably a magnesium salt or a zinc salt, very preferably a magnesium halide or zinc halide or a magnesium carboxylate or zinc carboxylate.

8. The aqueous polyvinyl ester dispersion as claimed in any of claims 1 to 7, which has a solids content of 30% - 65% by weight, wherein the vinyl ester copolymer contains 0.1 % to 10% by weight, based on the total monomers, of structural units derived from comonomers containing N-methylol groups, especially structural units derived from N-methylolacrylamide and/or from N-methylolmethacrylamide, wherein the vinyl ester copolymer contains, if desired, up to 10% by weight, based on the total monomers, of structural units derived from comonomers containing carboxylic acid groups, especially structural units derived from acrylic acid and/or from methacrylic acid, and wherein the amount of the protective colloid, preferably of the polyvinyl alcohol, is 0.1% to 30% by weight, based on the entirety of all of the monomers used in preparing the polyvinyl ester.

9. The aqueous polyvinyl ester dispersion as claimed in any of claims 1 to 8,
wherein the carboxylic acid of component c) is selected from the group consisting of oxalic acid, malonic acid, succinic acid, agaricic acid, citric acid, 1,2,3-propanetricarboxylic acid, hemimellitic acid, trimellitic acid, trimesic acid, tartaric acid, malic acid, maleic acid, fumaric acid, itaconic acid, propanedicarboxylic acid, butanetricarboxylic acid, butanetetracarboxylic acid, phthalic acid, isophthalic acid, terephthalic acid, cyclohexanetetracarboxylic acid, hexanetricarboxylic acid, and the full salts and half-salts of these carboxylic acids.

10. The aqueous polyvinyl ester dispersion as claimed in claim 1, which is composed of components a), b), c), and d) as claimed in claim 1 and, if desired, of further, customary additives e) which are selected from the group consisting of film-forming assistants for lowering the minimum film formation temperature, plasticizers, buffers, pH modifiers, dispersants, defoamers, fillers, dyes, pigments, silane coupling agents, thickeners, viscosity regulators, solvents, preservatives, further crosslinking compounds, and combinations of two or more of these additives.

11. The aqueous polyvinyl ester dispersion as claimed in claim 10, wherein the crosslinking compounds are selected from the group consisting of phenolformaldehyde resins, resorcinol-formaldehyde resins, melamine-formaldehyde resins, hydroxymethyl substituted imidazolidinones, hydroxymethyl-substituted thioimidazolidinones, hydroxymethyl-substituted pyrimidinones, hydroxymethyl-substituted triazinones, hydroxymethyl-substituted glycolurils or their selfcondensation products, or mixed condensates of two or more of the stated compounds, polyaldehydes, at least partly masked polyaldehydes, free or at least partly masked polyisocyanates, and combinations of two or more of these crosslinking compounds.

12. The use of the aqueous polyvinyl ester dispersion as claimed in any of claims 1 to 11 for coating and/or adhesively bonding substrates, preferably porous and/or semiporous substrates.

13. The use as claimed in claim 12, wherein the porous or semiporous substrate is wood which is used preferably in the production of veneers.

14. The use of the aqueous polyvinyl ester dispersion as claimed in any of claims 1 to 11 as a binder for textiles, especially for nonwovens.

15. The use of the aqueous polyvinyl ester dispersion as claimed in any of claims 1 to 11 as a binder for glass fibers.

## Revendications

1. Dispersion aqueuse d'esters de polyvinyle contenant
a) au moins un copolymère d'ester de vinyle dérivant d'au moins un ester de vinyle d'un acide monocarboxylique, d'au moins un monomère éthyléniquement insaturé et contenant des groupes N-alkylol et/ou de dérivés de ces groupes, et le cas échéant d'autres comonomères,
b) au moins un colloïde de protection,
c) au moins un acide carboxylique et/ou son sel, lesquels contiennent au moins un autre radical, choisi parmi le groupe des radicaux hydroxyles, aminos, carboxyles, esters d'acide carboxylique et amides d'acide carboxylique, et
d) au moins un sel hydrosoluble avec un ion métallique divalent.

2. Dispersion aqueuse d'esters de polyvinyle selon la revendication 1, **caractérisée en ce que** le copolymère d'ester de vinyle contient des groupes incorporés à la polymérisation qui sont dérivés de monomères éthyléniquement insaturés et contenant des groupes N-alkylol, en particulier des groupes N-méthylol et qui sont présents en une quantité de 0,1 à 10 % en poids, rapportée à l'ensemble du monomère.

3. Dispersion aqueuse d'esters de polyvinyle selon la revendication 2, **caractérisée en ce que** le copolymère d'ester de vinyle contient en plus d'autres unités de structure qui dérivent de comonomères, lesquels peuvent être copolymérisés avec les esters de vinyle et avec les monomères éthyléniquement insaturés et contenant des groupes N-méthylol, de préférence des structures dérivées d'esters de l'acide acrylique et/ou d'esters de l'acide méthacrylique et/ou d'acides mono- ou dicarboxyliques et/ou d'acides sulfoniques éthyléniquement insaturés.

4. Dispersion aqueuse d'esters de polyvinyle selon l'une quelconque des revendications 1 à 3, **caractérisée en ce que** le colloïde de protection est un alcool polyvinylique.

5. Dispersion aqueuse d'esters de polyvinyle selon l'une quelconque des revendications 1 à 4, **caractérisée en ce que** le composant c) est choisi parmi le groupe des acides hydroxycarboxyliques, des acides dicarboxyliques, des acides tricarboxyliques, des acides tétracarboxyliques, des acides aminocarboxyliques ou des sels de ces acides.

6. Dispersion aqueuse d'esters de polyvinyle selon la revendication 5, **caractérisée en ce que** l'acide hydroxycarboxylique est de l'acide citrique ou un sel de l'acide citrique.

7. Dispersion aqueuse d'esters de polyvinyle selon l'une quelconque des revendications 1 à 6, **caractérisée en ce que** le sel hydrosoluble avec un ion
métallique divalent est un sel avec un ion métallique du deuxième groupe principal ou secondaire du système périodique, de préférence un sel de magnésium ou un sel de zinc, de façon particulièrement préférée un halogénure de magnésium ou de zinc ou un carboxylate de magnésium ou de zinc.

8. Dispersion aqueuse d'esters de polyvinyle selon l'une quelconque des revendications 1 à 7, **caractérisée en ce que** celle-ci présente une teneur en solide de 30 à 65 % en poids, **en ce que** le copolymère d'ester de vinyle comporte 0,1 à 10 % en poids, rapportés à l'ensemble des monomères, d'unités de structure dérivées de comonomères contenant des groupes N-méthylol, en particulier d'unités de structures dérivées de N-méthylolacrylamide et/ou de N-méthylolméthacrylamide, **en ce que** le copolymère d'ester de vinyle comporte le cas échéant jusqu'à 10 % en poids, rapportés à l'ensemble des monomères, d'unités de structures dérivées de comonomères contenant des groupes acides carboxyliques, en particulier d'unités de structures dérivées de l'acide acrylique et/ou de l'acide méthacrylique, et **en ce que** la quantité du colloïde de protection, de préférence de l'alcool polyvinylique, est de 0,1 à 30 % en poids, rapportés à l'ensemble de tous les monomères utilisés à la préparation de l'ester de polyvinyle.

9. Dispersion aqueuse d'esters de polyvinyle selon l'une quelconque des revendications 1 à 8, **caractérisée en ce que** l'acide carboxylique du composant c) est choisi parmi le groupe de l'acide oxalique, de l'acide malonique, de l'acide succinique, de l'acide agaricique, de l'acide citrique, de l'acide propane 1,2,3-tricarboxylique, de l'acide hémimellithique, de l'acide trimellitique, de l'acide trimésique, de l'acide tartrique, de l'acide malique, de l'acide maléique, de l'acide fumarique, de l'acide itaconique, de l'acide propane dicarboxylique, de l'acide butane tricarboxylique, de l'acide butane tétracarboxylique, de l'acide phtalique, de l'acide isophtalique, de l'acide téréphtalique, de l'acide cyclohexane tétracarboxylique ou des sels intégraux ou des hémisels de ces acides carboxyliques.

10. Dispersion aqueuse d'esters de polyvinyle selon la revendication 1, **caractérisée en ce que** celle-ci consiste en les composants a), b), c) et d) selon la revendication 1 et le cas échéant en d'autres additifs habituels e), qui sont choisis parmi le groupe des auxiliaires de filmogenèse pour l'abaissement de la température minimale de formation de film, des plastifiants, des tampons, des ajusteurs de pH, des dispersants, des anti-mousse, des charges, des colorants, des pigments, des agents d'accouplement à silanes, des épaississants, des régulateurs de viscosité, des solvants, des agents de conservation, des autres composés à effet réticulant, ainsi que des combinaisons de deux ou plusieurs de ces additifs.

11. Dispersion aqueuse d'esters de polyvinyle selon la revendication 10, **caractérisée en ce que** les composés à effet réticulant sont choisis parmi le groupe des résines phénol-formaldéhyde, des résines résorcine-formaldéhyde, des résines mélamine-formaldéhyde, des imidazolidinones substituées par des hydroxyméthyles, des thioimidazolidinones substituées par des hydroxyméthyles, des pyrimidinones substituées par des hydroxyméthyles, des triazinones substituées par des hydroxyméthyles, des glycoluriles substitués par des hydroxyméthyles, ou leurs produits d'autocondensation ou des condensats mixtes de deux ou plusieurs des composés susmentionnés, des polyaldéhydes, des polyaldéhydes au moins partiellement masqués, des polyisocyanates libres ou au moins partiellement masqués, ainsi que des combinaisons de deux ou plusieurs de ces composés à effet réticulant.

12. Utilisation de la dispersion aqueuse d'esters de polyvinyle selon l'une quelconque des revendications 1 à 11 pour le revêtement et/ou le collage de substrats, de préférence de substrats poreux et/ou semi-poreux.

13. Utilisation selon la revendication 12, **caractérisée en ce que** le substrat poreux et/ou semi-poreux est du bois qui est utilisé de préférence à la fabrication de plaquages.

14. Utilisation de la dispersion aqueuse d'esters de polyvinyle selon l'une quelconque des revendications 1 à 11 comme liant pour des produits textiles bidimensionnels, en particulier pour des non-tissés.

15. Utilisation de la dispersion aqueuse d'esters de polyvinyle selon l'une quelconque des revendications 1 à 11 comme liant pour des fibres optiques.
